# EUROPÄISCHE PATENTSCHRIFT

(11) **EP 3 448 542 B1**
(45) Veröffentlichungstag und Bekanntmachung des Hinweises auf die Patenterteilung: **19.08.2020**
(21) Anmeldenummer: 17703038.4
(22) Anmeldetag: 17.01.2017
(51) Int. Cl.: B01D 46/24, B01D 46/00

(54) **FILTERELEMENT ZUR FILTRATION VON ABGASEN ODER PROZESSGASEN SOWIE VERFAHREN ZUR HERSTELLUNG EINES SOLCHEN FILTERELEMENTES**
FILTER ELEMENT FOR FILTERING EXHAUST GASES OR PROCESS GASES, AND METHOD FOR PRODUCING SUCH A FILTER ELEMENT
ÉLÉMENT FILTRANT POUR FILTRER DES GAZ D'ÉCHAPPEMENT OU DES GAZ DE PROCESSUS ET PROCÉDÉ POUR RÉALISER UN TEL ÉLÉMENT FILTRANT

(30) Priorität: 25.04.2016 DE 202016102187 U
(43) Veröffentlichungstag der Anmeldung: 06.03.2019
(73) Patentinhaber: Rath GmbH, 41066 Mönchengladbach (DE)
(72) Erfinder: PETZ, Martin, 3375 Krummnussbaum (AT)
(74) Vertreter: Paul & Albrecht Patentanwälte PartG mbB
(86) Internationale Anmeldenummer: PCT/EP2017/050893
(87) Internationale Veröffentlichungsnummer: WO 2017/186359

(56) Entgegenhaltungen:
- EP-A2- 0 730 896
- DE-A1-102012 107 097
- DE-A1-102014 011 678
- DE-U1-202006 011 990
- GB-A- 717 128

## Beschreibung

Die Erfindung betrifft ein Filterelement, insbesondere eine Filterkerze, zur Filtration von Abgasen oder Prozessgasen nach dem Oberbegriff von Anspruch 1. Außerdem betrifft die Erfindung ein Verfahren zur Herstellung eines solchen Filterelementes nach dem Oberbegriff von Anspruch 12.

Prozess- oder Abgase treten in den verschiedensten Bereichen der Industrie aber auch im Alltag eines jeden Menschen auf. Es gibt Abgase von Feuerungsanlagen, Gasturbinen, Müllverbrennungsanlagen und Verbrennungsmotoren, um nur einige Beispiele zu nennen. Aufgrund von Umwelt-, Sicherheits- und Gesundheitsauflagen müssen solche Prozess- oder Abgase, oftmals auch als Rohgase bezeichnet, gereinigt bzw. katalytisch behandelt werden. Infolge ihres Entstehungsprozesses handelt es sich bei solchen Rohgasen oftmals um Heißgase. Zur Reinigung von Prozess- oder Abgasen sind aus dem Stand der Technik Filterelemente bekannt, die in der Lage sind in dem Rohgas enthaltene giftige Schadstoffe mittels Katalyse zu reduzieren bzw. zu minimieren und/oder Feststoffpartikel oder Stäube aus dem Rohgas zu entfernen. Dies ist wichtig, da manche Schadstoffe bei einem Einatmen zu kurzfristigen Vergiftungserscheinungen führen können. Andererseits können Feinstoffpartikel in der Umgebungsluft mittel- oder langfristig Krebs beim Menschen verursachen. Bei derartigen Filterelementen handelt es sich häufig um sogenannte Filterkerzen, die Bestandteil eines größeren Filtermoduls oder Filtersystems sein können. Innerhalb eines solchen Filtermoduls sind die Filterkerzen häufig an ihrem einen Ende aufgehängt.

Aus den unterschiedlichsten Erwägungen, insbesondere aus prozesstechnischen Gründen, sind lange Filterelemente wünschenswert, die beispielsweise eine Länge von mehreren Metern aufweisen. Denn mit einer zunehmenden Länge der Filterelemente lässt sich beispielsweise eine höhere Filterleistung erzielen. Um derart lange Filterelemente zu erhalten, ist es bekannt, einen eine Längsrichtung definierenden Filterkörper eines Filterelementes entlang der Längsrichtung in mehrere im Wesentlichen rohrförmige Filterkörperelemente zu unterteilen. Die Filterkörperelemente sind dabei jeweils paarweise an ihren zueinander weisenden Endabschnitten verbunden, so dass insbesondere ein hohlzylindrischer Filterkerzenkörper ausgebildet wird.

In der DE 87 15 130 wird die Verbindung dadurch realisiert, dass die Filterkörperelemente endseitig ineinandergeschoben und zusätzlich miteinander verklebt sind. Da das Filterelement während seines Betriebs aufgehängt ist und die Gravitationskraft parallel zu dessen Längsrichtung wirkt, ist eine derartige Klebeverbindung aufgrund des Eigengewichts der Filterkörperelemente hohen mechanischen Belastungen ausgesetzt. Dies kann zu einem Abbrechen und/oder Abfallen von Filterkörperelemente führen.

Um bei einer solchen Verbindung die mechanische Stabilität zu erhöhen, wird in der DE 10 2013 016 380 A1 vorgeschlagen, zusätzlich ein Außenskelett vorzusehen. Ein solches Außenskelett bildet eine Art Stützkorb, der beispielsweise aus Seilen, Drähten, Stäben und/oder Platten besteht und ein Abbrechen und/oder Abfallen der Filterkörperelemente verhindern soll. Durch das Außenskelett kann die Klebeverbindung zwar entlastet werden, jedoch ist eine Installation eines derartigen Außenskeletts sehr zeit- und kostenaufwendig.

Aus der DE 10 2014 011 678 A1 ist ferner ein Filterelement mit zwei Filterkörperelementen bekannt, wobei das erste Filterkörperelement an seinem unterem Rand eine rotationssymmetrische stufenförmige Einfräsung und das zweite Filterkörperelement an seinem oberen Rand eine zu der Einfräsung komplementäre rotationssymmetrische Einfräsung aufweist. Eine Verbindung der Filterkörperelemente wird realisiert, indem die beiden Einfräsungen zusammengeführt werden. Zusätzlich können die Filterkörperelemente auch miteinander verklebt werden, um die Verbindungsstelle der beiden Filterkörperelemente abzudichten.

In der EP 0 730 896 A2 wird die Verbindung dadurch realisiert, dass die Filterkörperelemente mittels zusammenwirkender Innen- und Außengewinde miteinander verschraubt sind. Eine solche Schraubverbindung ist relativ stabil und löst sich auch bei einem hängenden Filterelement nicht oder nur sehr schwer. Jedoch kann durch eine reine Schraubverbindung nicht sichergestellt werden, dass der Trennspalt zwischen den durch Verschraubung verbundenen Filterkörperelementen derart abgedichtet ist, dass durch diesen keine Fluide von einem Außenbereich des Filterelementes in den Innenraum des Filterelementes eindringen und/oder von dem Innenraum in den Außenbereich austreten können. Dies ist jedoch zur Erzielung einer hohen Filterleistung erforderlich.

Der Erfindung liegt daher die Aufgabe zugrunde, ein Filterelement der eingangs genannten Art mit einer alternativ ausgestalteten Verbindung zwischen mehreren Filterkörperelementen bereitzustellen, die die Nachteile der vorbekannten Verbindungen gerade nicht aufweist.

Diese Aufgabe wird erfindungsgemäß dadurch gelöst, dass zwei paarweise miteinander verbundene Filterkörperelemente mittels an ihren Endabschnitten ausgebildeten und zueinander korrespondierenden Innen- und Außengewinden miteinander verschraubt und zusätzlich in ihren Kontaktbereichen mittels eines Klebstoffs miteinander verklebt sind, wobei die jeweils paarweise miteinander verbundenen Filterkörperelemente an ihren stirnseitigen Endflächen und im Eingriffsbereich der Innen- und Außengewinde, miteinander verklebt sind.

Grundgedanke der Erfindung ist es also, anstatt einer reinen Klebeverbindung oder einer reinen Schraubverbindung beide Verbindungsarten gemeinsam vorzusehen. Das erfindungsgemäße Filterelement weist bereits dadurch, dass die Filterkörperelemente miteinander verschraubt sind, eine gewisse Grundstabilität auf, die es ermöglicht, das Filterelement hängend in Betrieb zu nehmen, ohne dass die Gefahr besteht, dass sich Filterkörperelemente lösen und/oder herunterfallen. Eine weitere mechanische Entlastung der Verbindung der Filterkörperelemente durch zusätzliche Stabilisierungsmittel, wie beispielsweise ein Stützskelett, ist nicht erforderlich. Somit ist das erfindungsgemäße Filterelement kostengünstig und einfach herzustellen. Dadurch, dass die Filterkörperelemente zusätzlich miteinander verklebt sind, wird die Stabilität ihrer Verbindung noch erhöht. Durch die Verklebung ist ferner eine fluiddichte Verbindung und somit eine hohe Filterleistung sichergestellt.

Bei den mit dem erfindungsgemäßen Filterelement gefilterten Rohgasen kann es sich grundsätzlich um Abgase oder Prozessgase unterschiedlichster Temperaturen handeln. Das erfindungsgemäße Filterelement ist jedoch insbesondere zur Filtration von Abgasen oder Prozessgasen mit Temperaturen bis 750°C geeignet.

Gemäß einer Ausgestaltung der Erfindung sind die Innen- und Außengewinde konisch, insbesondere leicht konisch, ausgeführt, wobei sich das Außengewinde in Richtung einer Stirnseite des Endabschnittes, an dem das Außengewinde ausgebildet ist, verjüngt und das Innengewinde dazu korrespondierend verjüngt ausgebildet ist. Ein konisches Schraubgewinde bietet den Vorteil, dass die ersten Gewindegänge des Außengewindes und des Innengewindes axial aneinander vorbei geschoben werden, bis die Gewindegänge in Kontakt kommen, so dass zum axialen Festspannen nur wenige Umdrehungen erforderlich sind.

Bei den Innen- und Außengewinden kann es sich um Gewinde mit im Wesentlichen gleichmäßiger Gewindesteigung handeln. Die Gewindetiefe der Innen- und Außengewinde liegt vorteilhaft bei 5 bis 20 mm. Bei den Innen- und Außengewinden handelt es sich bevorzugt jeweils um ein Trapezgewinde, ein Rundgewinde und/oder ein Rechteckgewinde. Trapezgewinde haben eine relativ hohe Reibung und können daher selbsthemmend ausgelegt sein, so dass sie sich nicht von selbst lockern. Rundgewinde sind relativ widerstandsfähig, da sie keine filigranen Kanten aufweisen. Die Innen- und Außengewinde können in der Längsrichtung des Filterkörpers jeweils eine Länge von 50 bis 200 mm aufweisen.

.Zweckmäßigerweise erstreckt sich der Klebstoff in den axialen Übergangsbereichen zwischen zwei verbundenen Filterkörperelementen zumindest teilweise auf die Außenfläche und/oder Innenfläche des Filterkörpers. Eine Schichtdicke des Klebstoffs, die bevorzugt gleichmäßig ist, kann 1 bis 5 mm betragen. Durch die zuletzt erwähnten Maßnahmen jeweils für sich genommen oder in Kombination wird sichergestellt, dass der Trennspalt zwischen den verbundenen Filterkörperelementen optimal abgedichtet ist.

Zweckmäßigerweise ist der Klebstoff derart beschaffen, dass er bei einer Erhitzung über eine bestimmte Grenztemperatur aushärtet und/oder versintert, wobei der Klebstoff insbesondere bei 250°C keramisiert. Da das erfindungsgemäße Filterelement wie bereits zuvor beschrieben insbesondere zur Filtration von Abgasen oder Prozessgasen mit Temperaturen bis 750°C geeignet ist, hat eine Keramisierung bei 250°C den Vorteil, dass diese bei Inbetriebnahme oder während des Betriebs des Filterelementes automatisch erfolgen kann. Zudem wird durch eine Versinterung eine hohe mechanische Belastbarkeit und Festigkeit erzielt. Der Klebstoff kann Partikel aufweisen, die insbesondere eine Partikelgröße von bis zu 2 mm, bevorzugt 0,1 bis 0,5 mm, aufweisen. Von Vorteil kann der Klebstoff ein alumosilikatischer Klebstoff und/oder ein Klebstoff auf Wasserglasbasis sein.

Zweckmäßigerweise schließen die paarweise miteinander verbundenen Filterkörperelemente derart bündig miteinander ab, dass die Außenfläche und/oder die Innenfläche des Filterkörpers in den axialen Übergangsbereichen zwischen den beiden Filterkörperelementen im Wesentlichen glatt sind. Somit wird beispielsweise verhindert, dass sich während eines Betriebs des Filterelementes Staubpartikel an Kanten oder Vorsprüngen ansammeln und den weiteren Betrieb des Filterelementes beeinträchtigen.

Vorteilhafterweise weist das Filterelement die Form einer Filterkerze mit einem im Wesentlichen hohlzylindrischen Filterkerzenkörper auf, der an einem Ende, insbesondere halbkugelartig, geschlossen und an seinem gegenüberliegenden Ende offen ausgebildet ist. An dem offenen Ende des Filterkerzenkörpers kann ein radial abstehender Kragen angeformt sein, insbesondere ein im Wesentlichen zylindrischer Kragen oder ein im Wesentlichen konischer Kragen, der sich in Richtung des geschlossenen Endes des Filterkerzenkörpers verjüngt. Über den Kragen lässt sich das Filterelement problemlos an einer Aufhängvorrichtung eines Filtermoduls befestigen. Durch die spezielle Ausbildung des Filterelementes als Filterkerze kann während eines Betriebs des Filterelementes zu reinigendes Rohgas von einem Rohgasraum durch den Filterkerzenkörper in den Innenraum der Filterkerze hinein strömen. Hierbei kann das Rohgas größtenteils von Staubpartikeln und/oder Schadstoffen befreit werden und kann anschließend den Innenraum der Filterkerze an dessen offenem Ende verlassen und in einen Reingasraum hineinströmen.

Bevorzugt weisen Filterkörperelemente ein Vakuumformteil auf oder bestehen daraus. Bei dem Vakuumformteil kann es sich insbesondere um ein gebranntes oder ungebranntes Vakuumformteil auf Basis von Aluminiumsilikatwolle, Erdalkalisilikatwolle und/oder polykristalliner Hochtemperaturwolle handeln. Mittels Vakuumformtechnik lassen sich auch relativ komplizierte Formteile erzeugen. In dem Vakuumformteil kann auch zumindest ein Katalysator eingelagert sein.

Vorteilhaft weist der Filterkörper eine Länge von 1 bis 6 m, vorzugsweise 4 bis 6 m, auf und/oder weisen die Filterkörperelemente jeweils eine Länge von 0,5 bis 2,5 m auf. Gerade bei solch langen Filterelementen, die insbesondere ein hohes Eigengewicht mit sich bringen, bietet sich die erfindungsgemäße Verbindung jeweils zweier Filterkörperelemente mittels Verschraubung und Verklebung an.

Bevorzugt weist der Filterkörper einen Außendurchmesser von 30 bis 300 mm und/oder eine Wandstärke von 5 bis 30 mm, vorzugsweise 10 bis 25 mm, auf.

Zweckmäßigerweise weist das Material des Filterkörpers eine Porosität von 50 bis 90%, vorzugsweise größer als 70%, auf.

Die zuvor erwähnte Aufgabe der Erfindung wird erfindungsgemäß auch bei einem Verfahren der eingangs genannten Art dadurch gelöst, dass zwei paarweise miteinander zu verbindende Filterkörperelemente mittels an ihren Endabschnitten ausgebildeten und zueinander korrespondierenden Innen- und Außengewinden miteinander verschraubt und zusätzlich in ihren Kontaktbereichen mittels eines Klebstoffs miteinander verklebt werden, wobei die jeweils paarweise miteinander zu verbindenden Filterkörperelemente an ihren stirnseitigen Endflächen und im Eingriffsbereich der Innen- und Außengewinde miteinander verklebt werden. Dies ermöglicht eine gute Abdichtung des Trennspalts zwischen jeweils zwei verbundenen Filterkörperelementen gegen ein Durchdringen von Fluiden. Zweckmäßigerweise wird der Klebstoff in den Kontaktbereichen aufgetragen, bevor die mehreren Filterkörperelemente jeweils paarweise miteinander verschraubt werden. Auf diese Weise kann der Klebstoff bestmöglich in den Kontaktbereichen aufgetragen werden. Der Klebstoff kann in den axialen Übergangsbereichen zwischen zwei verbundenen Filterkörperelementen zumindest teilweise auf die Außenfläche und/oder Innenfläche des Filterkörpers aufgetragen werden. Dies trägt ebenfalls zu einer guten Abdichtung des Trennspalts bei. Vorteilhaft wird der Klebstoff mit einer Schichtdicke von 1 bis 5 mm, bevorzugt gleichmäßig, aufgetragen. Es kann ein Klebstoff verwendet werden, der bei einer Erhitzung über eine bestimmte Grenztemperatur aushärtet und/oder versintert, wobei der Klebstoff insbesondere bei 250°C keramisiert. Vorteilhafterweise wird ein Klebstoff verwendet, der Partikel aufweist, die insbesondere eine Partikelgröße von bis zu 2 mm, bevorzugt 0,1 bis 0,5 mm, aufweisen. Es ist auch möglich, dass ein Klebstoff verwendet wird, der dünnflüssig und/oder ein alumosilikatischer Klebstoff und/oder ein Klebstoff auf Wasserglasbasis ist.

Bevorzugt sind die Filterkörperelemente derart ausgebildet, dass jeweils zwei zu verbindende Filterkörperelemente bündig miteinander abschließen, so dass die Außenfläche und/oder die Innenfläche des Filterkörpers in den axialen Übergangsbereichen zwischen den beiden Filterkörperelementen im Wesentlichen glatt sind.

Bezüglich weiterer möglicher Merkmale des Filterelementes und Vorteile der Merkmale des erfindungsgemäßen Verfahrens zur Herstellung eines Filterelementes wird auf die Beschreibung des erfindungsgemäßen Filterelementes verwiesen, um Wiederholungen zu vermeiden.

Mit dem oben beschriebenen Filterelement wird also erstmals ein Filterelement mit einer alternativ ausgestalteten Verbindung zwischen mehreren Filterkörperelementen bereitgestellt, die die Nachteile der vorbekannten Verbindungen gerade nicht aufweist.

Weitere Merkmale und Vorteile der vorliegenden Erfindung werden anhand der nachfolgenden Beschreibung einer Ausführungsform des erfindungsgemäßen Filterelementes unter Bezugnahme auf die beiliegende Zeichnung deutlich. Darin ist:
- Figur 1: eine schematische Ansicht eines erfindungsgemäßen Filterelementes gemäß einer Ausführungsform der vorliegenden Erfindung;
- Figur 2: eine schematische Zoomansicht eines Verbindungsbereiches des erfindungsgemäßen Filterelementes gemäß Figur 1;
- Figur 3: eine schematische Querschnittsansicht eines Teils eines ersten Filterkörperelementes des erfindungsgemäßen Filterelementes gemäß Figur 1 in einer nicht verschraubten und nicht verklebten Konfiguration; und
- Figur 4: eine schematische Querschnittsansicht eines Teils eines zweiten Filterkörperelementes des erfindungsgemäßen Filterelementes gemäß Figur 1 in einer nicht verschraubten und nicht verklebten Konfiguration.

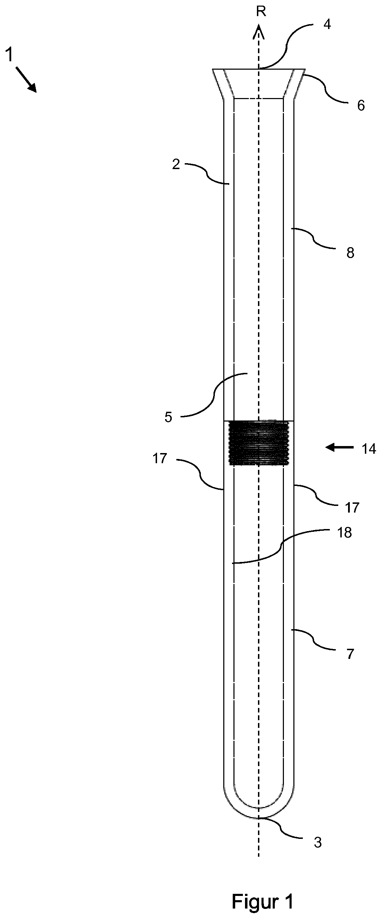

Die Figuren 1 bis 4 zeigen schematische Ansichten eines erfindungsgemäßen Filterelementes 1 zur Filtration von Abgasen oder Prozessgasen gemäß einer Ausführungsform der vorliegenden Erfindung. Wie aus der Figur 1 ersichtlich ist, ist das Filterelement 1 in Form einer Filterkerze ausgebildet und besitzt einen im Wesentlichen hohlzylindrischen Filterkörper 2, der an seinem einen, unteren Ende 3 halbkugelartig geschlossen und an seinem gegenüberliegenden, oberen Ende 4 offen ausgebildet ist und einen Innenraum 5 des Filterelementes 1 definiert. An dem offenen Ende 4 des Filterkörpers 2 ist ein radial abstehender konischer Kragen 6 angeformt, der sich in Richtung des geschlossenen Endes 3 des Filterkörpers 2 verjüngt.

Der Filterkörper 2 definiert eine Längsrichtung R und ist entlang dieser in zwei im Wesentlichen zylinderrohrförmige Filterkörperelemente 7, 8 unterteilt, die an ihren zueinander weisenden Endabschnitten 9, 10 miteinander verbunden sind. Hierzu weisen die Filterkörperelemente 7, 8 an ihren zueinander weisenden Endabschnitten 9, 10 zueinander korrespondierende Innen- und Außengewinde 11, 12 auf, über die sie miteinander verschraubt sind. Zusätzlich sind die Endabschnitte 9, 10 in ihren Kontaktbereichen mittels eines Klebstoffs 13 miteinander verklebt. Das Vorsehen beider Verbindungsarten, also Kleben und Schrauben, ist vorteilhaft. Im Gegensatz zu einer reinen Verklebung der Filterkörperelemente 7, 8 wird eine größere Stabilität der Verbindung erreicht. Verglichen mit einer reinen Verschraubung wird gewährleistet, dass der Trennspalt zwischen den durch Verschraubung verbundenen Filterkörperelementen 7, 8 gegen ein Durchdringen von Fluiden abgedichtet ist.

Die beiden Filterkörperelemente 7, 8 sind als Vakuumformteile mit eingelagertem Katalysator aufgebaut. Bei den Vakuumformteilen kann es sich beispielsweise um gebrannte oder ungebrannte Vakuumbauteile auf Basis von Aluminiumsilikatwolle, Erdalkalisilikatwolle und/oder polykristalliner Hochtemperaturwolle handeln. Auch wenn in der vorliegenden Ausführungsform ein Katalysator in die Vakuumformteile eingelagert ist, sollte klar sein, dass auch Ausführungsformen denkbar sind, bei denen kein solcher Katalysator in die Vakuumformteile eingelagert ist. Vakuumformteile können auch lediglich ein Bestandteil des Filterkörpers 2 sein oder der Filterkörper 2 kann ganz ohne Vakuumformteil auskommen. Generell sollte das Material des Filterkörpers 2 eine Porosität von 50 bis 90%, bevorzugt größer als 70%, aufweisen.

Der Filterkörper 2 kann in üblicher Weise beispielsweise 1 bis 6 m, vorzugsweise 4 bis 6 m, lang sein. Wie der Figur 1 zu entnehmen ist, macht jedes der beiden Filterkörperelemente 3, 4 in etwa die Hälfte der Gesamtlänge des Filterkörpers 2 aus. Selbstverständlich ist es in anderen hier nicht dargestellten Ausführungsformen auch möglich, den Filterkörper 2 aus mehr als zwei Filterkörperelementen 7, 8 zu bilden, so dass jedes Filterkörperelement 7, 8 einen kleineren Anteil der Gesamtlänge des Filterkörpers 2 ausmacht. Der Filterkörper 2 kann einen Außendurchmesser von 30 bis 300 mm und/oder eine Wandstärke von 5 bis 30 mm, vorzugsweise 10 bis 25 mm, aufweisen.

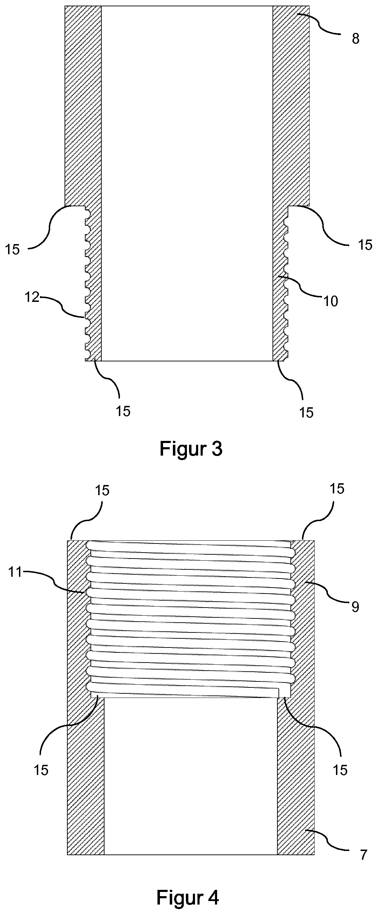

Insbesondere aus den Figuren 3 und 4 lässt sich erkennen, wie die beiden Filterkörperelemente 7, 8 des vorliegenden Ausführungsbeispiels eines erfindungsgemäßen Filterelementes 1 miteinander verschraubt sind. Zum Zwecke einer übersichtlicheren Darstellung sind Teile der beiden Filterkörperelemente 7, 8 in den Figuren 3 und 4 in einer nicht verschraubten und nicht verklebten Konfiguration dargestellt. Bei den Innen- und Außengewinden 11, 12 handelt es sich um Gewinde mit im Wesentlichen gleichmäßiger Gewindesteigung. Diese besitzen in der Längsrichtung R hier jeweils eine Länge von 50 bis 200 mm. Die Gewindetiefe der Innen- und Außengewinde 11, 12 liegt bei 5 bis 20 mm. In anderen hier nicht dargestellten Ausführungsformen können die Innen- und Außengewinde 11, 12 auch konisch ausgeführt sein. Die Innen- und Außengewinde 11, 12 der vorliegenden Ausführungsform ähneln zum Teil einem Rundgewinde. Grundsätzlich kann es sich bei den Innen- und Außengewinden 11, 12 beispielsweise auch um Trapezgewinde oder Flachgewinde handeln.

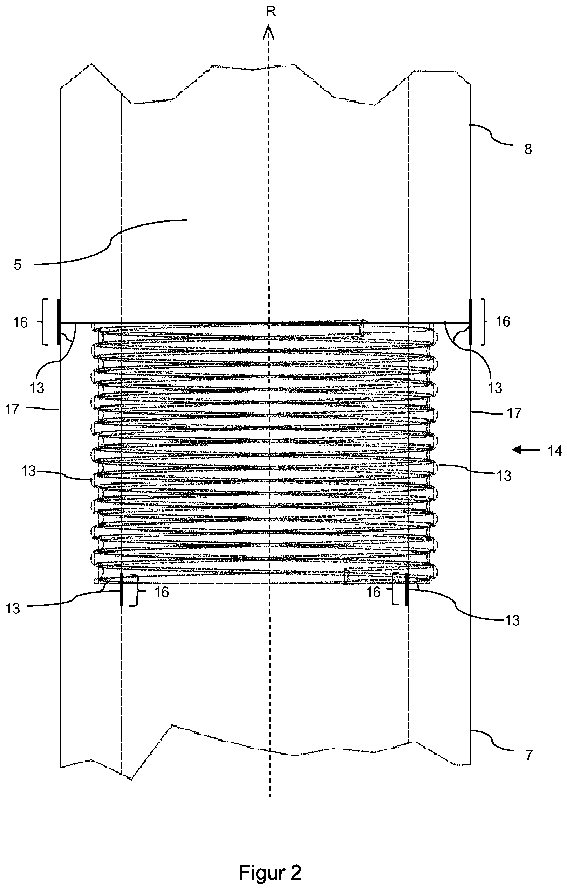

Der in der Figur 2 gezeigten Zoomansicht eines Verbindungsbereichs 14 des erfindungsgemäßen Filterelementes 1 ist zu entnehmen, dass die beiden Filterkörperelemente 7, 8 in ihren Kontaktbereichen, also im vorliegenden Ausführungsbeispiel an ihren stirnseitigen Endflächen 15 und im Eingriffsbereich der Innen- und Außengewinde 11, 12, miteinander verklebt sind. Zusätzlich erstreckt sich der Klebstoff 13 in den axialen Übergangsbereichen 16 zwischen den beiden verbundenen Filterkörperelementen 7, 8 zumindest teilweise auf die Außenfläche 17 und Innenfläche 18 des Filterelementes 1. Die Schichtdicke des Klebstoffs 13 ist gleichmäßig und kann beispielsweise 1 bis 5 mm betragen. Im vorliegenden Ausführungsbeispiel ist der Klebstoff 13 derart beschaffen, dass er bei einer Erhitzung über eine bestimmte Grenztemperatur versintert. Hierdurch wird eine hohe mechanische Belastbarkeit und Festigkeit erzielt. In anderen hier nicht dargestellten Ausführungsformen kann der Klebstoff 13 zusätzlich oder alternativ beispielsweise auch Partikel aufweisen, dünnflüssig sein, ein alumosilikatischer Klebstoff und/oder ein Klebstoff auf Wasserglasbasis sein.

Wie ebenfalls der Figur 2 zu entnehmen ist, schließen die beiden miteinander verbundenen Filterkörperelemente 7, 8 derart bündig miteinander ab, dass die Außenfläche 17 und die Innenfläche 18 des Filterkörpers 2 in den axialen Übergangsbereichen 16 zwischen den beiden Filterkörperelementen 7, 8 im Wesentlichen glatt sind, d.h. ohne größere Kanten oder Vorsprünge.

Bezüglich weiterer Merkmale beziehungsweise Vorteile der Merkmale oder Merkmalskombinationen der zuvor beschriebenen Ausführungsform eines erfindungsgemäßen Filterelementes wird zur Vermeidung von Wiederholungen auf den allgemeinen Beschreibungsteil verwiesen.

### Bezugszeichenliste

- 1: Filterelement
- 2: Filterkörper
- 3: geschlossenes Ende
- 4: offenes Ende
- 5: Innenraum
- 6: Kragen
- 7: Filterkörperelement
- 8: Filterkörperelement
- 9: Endabschnitt
- 10: Endabschnitt
- 11: Innengewinde
- 12: Außengewinde
- 13: Klebstoff
- 14: Verbindungsbereich
- 15: stirnseitige Endfläche
- 16: axialer Übergangsbereich
- 17: Außenfläche
- 18: Innenfläche

## Patentansprüche

1. Filterelement (1), insbesondere Filterkerze, zur Filtration von Abgasen oder Prozessgasen, mit einem Filterkörper (2), welcher eine Längsrichtung (R) definiert und entlang dieser in mehrere im Wesentlichen rohrförmige Filterkörperelemente (7, 8) unterteilt ist, die jeweils paarweise an ihren zueinander weisenden Endabschnitten (9, 10) verbunden sind, wobei der Filterkörper (2) einen Innenraum (5) des Filterelements (1) definiert, **dadurch gekennzeichnet, dass** zwei paarweise miteinander verbundene Filterkörperelemente (7, 8) mittels an ihren Endabschnitten (9, 10) ausgebildeten und zueinander korrespondierenden Innen- und Außengewinden (11, 12) miteinander verschraubt und zusätzlich in ihren Kontaktbereichen mittels eines Klebstoffs (13) miteinander verklebt sind, wobei die jeweils paarweise miteinander verbundenen Filterkörperelemente (7, 8) an ihren stirnseitigen Endflächen (15) und im Eingriffsbereich der Innen- und Außengewinde (11, 12) miteinander verklebt sind.

2. Filterelement (1) nach Anspruch 1, **dadurch gekennzeichnet, dass** die Innen- und Außengewinde (11, 12) konisch, insbesondere leicht konisch, ausgeführt sind, wobei sich das Außengewinde (12) in Richtung einer Stirnseite des Endabschnittes (6), an dem das Außengewinde (12) ausgebildet ist, verjüngt und das Innengewinde (10) dazu korrespondierend verjüngt ausgebildet ist, und/oder
dass es sich bei den Innen- und Außengewinden (11, 12) um Gewinde mit im Wesentlichen gleichmäßiger Gewindesteigung handelt, und/oder
dass die Gewindetiefe der Innen- und Außengewinde (11, 12) jeweils bei 5 bis 20 mm liegt, und/oder dass es sich bei den Innen- und Außengewinden (11, 12) jeweils um ein Trapezgewinde, ein Rundgewinde und/oder ein Rechteckgewinde handelt, und/oder
dass die Innen- und Außengewinde (11, 12) in der Längsrichtung (R) jeweils eine Länge von 50 bis 200 mm aufweisen.

3. Filterelement (1) nach einem der vorhergehenden Ansprüche, **dadurch gekennzeichnet, dass** sich der Klebstoff (13) in den axialen Übergangsbereichen (16) zwischen zwei verbundenen Filterkörperelementen (7, 8) zumindest teilweise auf die Außenfläche (17) und/oder Innenfläche (18) des Filterkörpers (2) erstreckt, und/oder
dass eine Schichtdicke des Klebstoffs (13), die bevorzugt gleichmäßig ist, 1 bis 5 mm beträgt.

4. Filterelement (1) nach einem der vorhergehenden Ansprüche, **dadurch gekennzeichnet, dass** der Klebstoff (13) derart beschaffen ist, dass er bei einer Erhitzung über eine bestimmte Grenztemperatur aushärtet und/oder versintert.

5. Filterelement (1) nach einem der vorhergehenden Ansprüche, **dadurch gekennzeichnet, dass** der Klebstoff (13) Partikel aufweist, die insbesondere eine Partikelgröße von bis zu 2 mm, bevorzugt 0,1 bis 0,5 mm, aufweisen, und/oder dass der Klebstoff (13) ein alumosilikatischer Klebstoff und/oder ein Klebstoff auf Wasserglasbasis ist.

6. Filterelement (1) nach einem der vorherigen Ansprüche, **dadurch gekennzeichnet, dass** die paarweise miteinander verbundenen Filterkörperelemente (7, 8) derart bündig miteinander abschließen, dass die Außenfläche (17) und/oder die Innenfläche (18) des Filterkörpers (2) in den axialen Übergangsbereichen (16) zwischen den beiden Filterkörperelementen (7, 8) im Wesentlichen glatt sind.

7. Filterelement (1) nach einem der vorhergehenden Ansprüche, **dadurch gekennzeichnet, dass** es die Form einer Filterkerze mit einem im Wesentlichen hohlzylindrischen Filterkerzenkörper (2) aufweist, der an einem Ende (3), insbesondere halbkugelartig, geschlossen und an seinem gegenüberliegenden Ende (4) offen ausgebildet ist.

8. Filterelement (1) nach Anspruch 7, **dadurch gekennzeichnet, dass** an dem offenen Ende (4) des Filterkerzenkörpers (2) ein radial abstehender Kragen (6) angeformt ist, insbesondere ein im Wesentlichen zylindrischer Kragen oder ein im Wesentlichen konischer Kragen, der sich in Richtung des geschlossenen Endes (3) des Filterkerzenkörpers (2) verjüngt.

9. Filterelement (1) nach einem der vorhergehenden Ansprüche, **dadurch gekennzeichnet, dass** die Filterkörperelemente (7,8) ein Vakuumformteil, insbesondere ein gebranntes oder ungebranntes Vakuumformteil auf Basis von Aluminiumsilikatwolle, Erdalkalisilikatwolle und/oder polykristalliner Hochtemperaturwolle aufweisen oder daraus bestehen.

10. Filterelement (1) nach Anspruch 9, **dadurch gekennzeichnet, dass** in dem Vakuumformteil zumindest ein Katalysator eingelagert ist.

11. Filterelement (1) nach einem der vorhergehenden Ansprüche, **dadurch gekennzeichnet, dass** der Filterkörper (2) eine Länge von 1 bis 6 m, vorzugsweise 4 bis 6 m, aufweist und/oder die Filterkörperelemente (7, 8) jeweils eine Länge von 0,5 bis 2,5 m aufweisen, und/oder
dass der Filterkörper (2) einen Außendurchmesser von 30 bis 300 mm und/oder eine Wandstärke von 5 bis 30 mm, vorzugsweise von 10 bis 25 mm, aufweist, und/oder
dass ein Material des Filterkörpers (2) eine Porosität von 50 bis 90%, vorzugsweise größer als 70%, aufweist.

12. Verfahren zur Herstellung eines Filterelementes (1), insbesondere nach einem der vorhergehenden Ansprüche, wobei zur Bildung eines Filterkörpers (2) des Filterelementes (1) mehrere im Wesentlichen rohrförmige Filterkörperelemente (7, 8) jeweils paarweise an ihren zueinander weisenden Endabschnitten (9, 10) verbunden werden, **dadurch gekennzeichnet, dass** zwei paarweise miteinander zu verbindende Filterkörperelemente (7, 8) mittels an ihren Endabschnitten (9, 10) ausgebildeten und zueinander korrespondierenden Innen- und Außengewinden (11, 12) miteinander verschraubt und zusätzlich in ihren Kontaktbereichen mittels eines Klebstoffs (13) miteinander verklebt werden, wobei die jeweils paarweise miteinander zu verbindenden Filterkörperelemente (7, 8) an ihren stirnseitigen Endflächen (15) und im Eingriffsbereich der Innen- und Außengewinde (11, 12) miteinander verklebt werden.

13. Verfahren nach Anspruch 12, **dadurch gekennzeichnet, dass** der Klebstoff (13) in den Kontaktbereichen aufgetragen wird, bevor die mehreren Filterkörperelemente (7, 8) jeweils paarweise miteinander verschraubt werden, und/oder
dass der Klebstoff (13) in den axialen Übergangsbereichen (16) zwischen zwei verbundenen Filterkörperelementen (7, 8) zumindest teilweise auf die Außenfläche (17) und/oder Innenfläche (18) des Filterkörpers (2) aufgetragen wird.

14. Verfahren nach einem der Ansprüche 12 bis 13, **dadurch gekennzeichnet, dass** ein Klebstoff (13) verwendet wird, der bei einer Erhitzung über eine bestimmte Grenztemperatur aushärtet und/oder versintert, wobei der Klebstoff (13) insbesondere bei 250°C keramisiert, und/oder dass ein Klebstoff (13) verwendet wird, der Partikel aufweist, die insbesondere eine Partikelgröße von bis zu 2 mm, bevorzugt 0,1 bis 0,5 mm, aufweisen, und/oder dass ein Klebstoff (13) verwendet wird, der dünnflüssig und/oder ein alumosilikatischer Klebstoff und/oder ein Klebstoff auf Wasserglasbasis ist.

15. Verfahren nach einem der Ansprüche 12 bis 14, **dadurch gekennzeichnet, dass** die Filterkörperelemente (7, 8) derart ausgebildet sind, dass jeweils zwei zu verbindende Filterkörperelemente (7, 8) bündig miteinander abschließen, so dass die Außenfläche (17) und/oder die Innenfläche (18) des Filterkörpers (2) in den axialen Übergangsbereichen (16) zwischen den beiden Filterkörperelementen (7, 8) im Wesentlichen glatt sind.

## Claims

1. Filter element (1), in particular filter cartridge, for filtering exhaust gases or process gases, having a filter body (2) which defines a longitudinal direction (R) and is subdivided along the latter into a plurality of substantially tubular filter body elements (7, 8) which are each connected in pairs at their end portions (9, 10) pointing towards one another, the filter body (2) defining an interior space (5) of the filter element (1), **characterized in that** two filter body elements (7, 8) which are connected to one another in pairs are screwed to one another by means of internal and external threads (11, 12) which are formed at their end portions (9, 10) and correspond to one another, and are additionally bonded to one another in their contact regions by means of an adhesive (13), wherein the filter body elements (7, 8), which are respectively connected to one another in pairs, are adhesively bonded to one another at their end faces (15) and in the engagement region of the internal and external threads (11, 12).

2. Filter element (1) according to claim 1, **characterized in that** the internal and external threads (11, 12) are conical, in particular slightly conical, wherein the external thread (12) tapers in the direction of an end face of the end portion (6) on which the external thread (12) is formed and the internal thread (10) is correspondingly tapered, and/or
that the internal and external threads (11, 12) are threads with a substantially uniform thread pitch and/or that the thread depth of the internal and external threads (11, 12) is in each case 5 to 20 mm, and/or
that the internal and external threads (11, 12) are each a trapezoidal thread, a round thread and/or a rectangular thread and/or
that the internal and external threads (11, 12) each have a length of 50 to 200 mm in the longitudinal direction (R).

3. Filter element (1) according to one of the preceding claims, **characterized in that** the adhesive (13) extends in the axial transition regions (16) between two connected filter body elements (7, 8) at least partially onto the outer surface (17) and/or inner surface (18) of the filter body (2) and/or
a layer thickness of the adhesive (13), which is preferably uniform, is 1 to 5 mm.

4. Filter element (1) according to one of the preceding claims, **characterized in that** the adhesive (13) is designed in such a way that it cures and/or sinters when heated above a specific limit temperature.

5. Filter element (1) according to one of the preceding claims, **characterized in that** the adhesive (13) has particles which in particular have a particle size of up to 2 mm, preferably 0.1 to 0.5 mm and/or that the adhesive (13) is an alumosilicate adhesive and/or a waterglass-based adhesive.

6. Filter element (1) according to one of the proceeding claims, **characterized in that** the filter body elements (7, 8), which are connected to one another in pairs, are flush with one another in such a way that the outer surface (17) and/or the inner surface (18) of the filter body (2) are substantially smooth in the axial transition regions (16) between the two filter body elements (7, 8).

7. Filter element (1) according to one of the preceding claims, **characterized in that** it has the shape of a filter cartridge with a substantially hollow cylindrical filter cartridge body (2), which is closed at one end (3), in particular hemispherical, and open at its opposite end (4).

8. Filter element (1) according to claim 7, **characterized in that** a radially projecting collar (6) is integrally formed on the open end (4) of the filter cartridge body (2), in particular a substantially cylindrical collar or a substantially conical collar which tapers in the direction of the closed end (3) of the filter cartridge body (2).

9. Filter element (1) according to one of the preceding claims, **characterized in that** the filter body elements (7, 8) comprise or consist of a vacuum moulded part, in particular a fired or unfired vacuum moulded part based on aluminium silicate wool, alkaline earth silicate wool and/or polycrystalline high-temperature wool.

10. Filter element (1) according to Claim 9, **characterized in that** at least one catalyst is incorporated in the vacuum moulding.

11. Filter element (1) according to one of the preceding claims, **characterized in that** the filter body (2) has a length of 1 to 6 m, preferably 4 to 6 m, and/or the filter body elements (7, 8) each have a length of 0.5 to 2.5 m and/or that the filter body (2) has an outer diameter of 30 to 300 mm and/or a wall thickness of 5 to 30 mm, preferably of 10 to 25 mm and/or that a material of the filter body (2) has a porosity of 50 to 90%, preferably greater than 70%.

12. Method for producing a filter element (1), in particular according to one of the preceding claims, wherein, in order to form a filter body (2) of the filter element (1), a plurality of substantially tubular filter body elements (7, 8) are each connected in pairs at their end portions (9, 10) pointing to one another, **characterized in that** two filter body elements (7, 8) to be connected to one another in pairs are screwed to one another by means of internal and external threads (11, 12) formed at their end portions (9, 10) and corresponding to one another, and are additionally glued to one another in their contact regions by means of an adhesive (13), wherein the filter body elements (7, 8) to be connected to one another in pairs in each case are adhesively bonded to one another at their end faces (15) and in the engagement region of the internal and external threads (11, 12).

13. Method according to claim 12, **characterized in that** the adhesive (13) is applied in the contact regions before the plurality of filter body elements (7, 8) are each screwed together in pairs and/or that the adhesive (13) is applied at least partially to the outer surface (17) and/or inner surface (18) of the filter body (2) in the axial transition regions (16) between two connected filter body elements (7, 8).

14. Method according to one of claims 12 to 13, **characterized in that** an adhesive (13) is used which cures and/or sinters when heated above a certain limit temperature, the adhesive (13) ceramicizing in particular at 250°C, and/or that an adhesive (13) is used which comprises particles which in particular have a particle size of up to 2 mm, preferably 0.1 to 0.5 mm and/or that an adhesive (13) is used which is thin liquid and/or an aluminosilicate adhesive and/or a water glass based adhesive.

15. Method according to one of the claims 12 to 14, **characterized in that** the filter body elements (7, 8) are designed in such a way that in each case two filter body elements (7, 8) to be connected are flush with one another, so that the outer surface (17) and/or the inner surface (18) of the filter body (2) are substantially smooth in the axial transition regions (16) between the two filter body elements (7, 8).

## Revendications

1. Elément de filtre (1), en particulier bougie filtrante, pour la filtration de gaz d'échappement ou de gaz de processus, avec un corps de filtre (2) qui définit une direction longitudinale (R) et qui est divisé le long de cette direction en plusieurs éléments de corps de filtre (7, 8) sensiblement tubulairs, qui sont respectivement reliés par paires à leurs sections d'extrémité (9, 10) tournées l'une vers l'autre, le corps de filtre (2) définissant un espace intérieur (5) de l'élément de filtre (1), **caractérisé en ce que** deux éléments de corps de filtre (7, 8) reliés par paires sont vissés l'un à l'autre au moyen de filetage intérieurs et extérieurs (11, 12) formés sur leurs section d'extrémité (9, 10) et correspondants l'un à l'autre et sont en outre collés l'un à l'autre dans leurs zones de contact au moyen d'une colle (13), les éléments de corps de filtre (7, 8) reliées respectivement par paires étant collés l'un à l'autre sur leurs faces frontales (15) et dans la zone d'engagement de filetages intérieurs et extérieurs (11, 12).

2. Elément de filtre (1) selon la revendication 1, **caractérisé en ce que** les filetages intérieurs et extérieurs (11, 12) sont coniques, en particulier légèrement coniques, le filetage extérieur (12) se rétrécissant en direction d'une face frontale de la section terminale (6) sur laquelle est formé le filetage extérieur (12), et le filetage intérieur (10) se rétrécissant d'une manière correspondante, et/ou
**en ce que** les filetages intérieurs et extérieurs (11, 12) sont des filetages à pas sensiblement uniforme, et/ou
**en ce que** la profondeur du filet des filetages intérieurs et extérieurs (11, 12) est de 5 à 20 mm, et/ou **en ce que** les filetages intérieurs et extérieurs (11, 12) sont respectivement des filetages trapézoïdales, des filetages ronds et/ou des filetages rectangulaires, et/ou
**en ce que** les filetages intérieurs et extérieurs (11, 12) ont chacun une longueur de 50 à 200 mm dans la direction longitudinale (R).

3. Elément de filtre (1) selon l'une des revendications précédentes, **caractérisé en ce que** la colle (13) s'étend dans les zones de transition axiale (16) entre deux éléments de corps de filtre (7, 8) reliés entre eux au moins partiellement sur la surface extérieure (17) et/ou la surface intérieure (18) du corps de filtre (2), et/ou
**en ce qu'**une épaisseur de couche de la colle (13), de préférence uniforme, est de 1 à 5 mm.

4. Elément de filtre (1) selon l'une des revendications précédentes, **caractérisé en ce que** la colle (13) est telle qu'elle durcit et/ou se fritte lorsqu'elle est chauffée au-delà d'une certaine température limite.

5. Elément de filtre (1) selon l'une des revendications précédentes, **caractérisé en ce que** la colle (13) présente des particules qui, en particulier, ont une taille de particules allant jusqu'à 2 mm, de préférence de 0,1 à 0,5 mm, et/ou **en ce que** la colle (13) est un adhésif à base d'aluminosilicate et/ou un adhésif à base de verre soluble.

6. Elément de filtre (1) selon l'une des revendications précédentes, **caractérisé en ce que** les éléments de corps de filtre (7, 8) reliés entre eux par paires se terminent à fleur l'un de l'autre de telle manière que la surface extérieure (17) et/ou la surface intérieure (18) du corps de filtre (2) sont sensiblement lisses dans les zones de transition axiale (16) entre les deux éléments de corps de filtre (7, 8).

7. Elément de filtre (1) selon l'une des revendications précédentes, **caractérisé en ce qu'**il a la forme d'une bougie filtrante avec un corps de bougie filtrante (2) sensiblement cylindrique creux, qui est fermé à une extrémité (3), en particulier en forme d'hémisphère, et ouvert à son extrémité opposée (4).

8. Elément de filtre (1) selon la revendication 7, **caractérisé en ce que** sur l'extrémité ouvert (4) du corps du bougie filtrante (2) est formé un collet (6) faisant saillie radialement, en particulier un collet sensiblement cylindrique ou un collet sensiblement conique, qui se rétrécit en direction de l'extrémité fermée (3) du corps du bougie filtrante (2).

9. Elément de filtre (1) selon l'une des revendications précédentes, **caractérisé en ce que** les éléments de corps de filtre (7, 8) comprennent ou consistent en un moulage sous vide, en particulier un moulage sous vide cuit ou non cuit à base de laine de silicate d'aluminium, de laine de silicate alcalino-terreux et/ou de laine polycristalline haute température.

10. Elément de filtre (1) selon la revendication 9, **caractérisé en ce qu'**au moins un catalyseur est incorporé dans le moulage sous vide.

11. Elément de filtre (1) selon l'une des revendications précédentes, **caractérisé en ce que** le corps de filtre (2) a une longueur de 1 à 6 m, de préférence de 4 à 6 m, et/ou les éléments de corps de filtre (7, 8) ont chacun une longueur de 0,5 à 2,5 m, et/ou
**en ce que** le corps du filtre (2) a un diamètre extérieur de 30 à 300 mm et/ou une épaisseur de paroi de 5 à 30 mm, de préférence de 10 à 25 mm, et/ou **en ce qu'**un matériau du corps de filtre (2) a une porosité de 50 à 90%, de préférence supérieure à 70%.

12. Procédé de fabrication d'un élément de filtre (1), en particulier selon l'une des revendications précédentes, plusieurs éléments de corps de filtre (7, 8) sensiblement tubulaires étant reliés par paires à leurs sections d'extrémité (9, 10) tournées l'une vers l'autre pour former un corps de filtre (2) de l'élément de filtre (1), le procédé étant **caractérisé en ce que** deux éléments de corps de filtre (7, 8) à relier par paires sont vissés entre eux au moyen des filetages intérieurs et extérieurs (11, 12) correspondants formés aux parties d'extrémité (9, 10) des éléments de corps de filtre (7, 8) et en outre sont collés ensemble dans leurs zones de contact au moyen d'une colle (13), les éléments de corps de filtre (7, 8) à relier ensemble par paires étant collés ensemble sur leurs faces frontales (15) et dans la zone d'engagement des filetages intérieurs et extérieurs (11, 12).

13. Procédé selon la revendication 12, **caractérisé en ce que** la colle (13) est appliqué dans les zones de contact avant que les différents éléments de corps de filtre (7, 8) soient chacun vissés ensemble par paires, et/ou
**en ce que** la colle (13) est appliqué au moins partiellement sur la surface extérieure (17) et/ou la surface intérieure (18) du corps de filtre (2) dans les zones de transition axiale (16) entre deux éléments de corps de filtre (7, 8) reliés.

14. Procédé selon l'une des revendications 12 à 13, **caractérisé en ce que** l'on utilise une colle (13) qui durcit et/ou se fritte lorsqu'il est chauffé au-dessus d'une certaine température limite, la colle (13) se céramisant en particulier à 250°C, et/ou **en ce que** l'on utilise une colle (13) qui présente des particules, qui ont en particulier une taille de particules allant jusqu'à 2 mm, de préférence de 0,1 à 0,5 mm, et/ou **en ce que** l'on utilise une colle (13) qui est de faible viscosité et/ou est un adhésif à base d'aluminosilicate et/ou est un adhésif à base de verre soluble.

15. Procédé selon l'une des revendications 12 à 14, **caractérisé en ce que** les éléments de corps de filtre (7, 8) sont conçus de telle sorte que deux éléments de corps de filtre (7, 8) à relier se terminent à fleur l'un de l'autre de sorte que la surface extérieure (17) et/ou la surface intérieure (18) du corps de filtre (2) sont sensiblement lisses dans les zones de transition axiales (16) entre les deux éléments de corps de filtre (7, 8).
